Europäisches Patentamt

European Patent Office

Office européen des brevets

(11) Publication number: **0 179 612 B1**

# EUROPEAN PATENT SPECIFICATION

(45) Date of publication of patent specification: **07.08.91**    (51) Int. Cl.⁵: **H04N 7/167**, H04L 9/00, H04K 1/02

(21) Application number: **85307456.5**

(22) Date of filing: **16.10.85**

(54) **Cryptographic system for direct broadcast satellite network.**

(30) Priority: **26.10.84 US 665114**

(43) Date of publication of application:
**30.04.86 Bulletin 86/18**

(45) Publication of the grant of the patent:
**07.08.91 Bulletin 91/32**

(84) Designated Contracting States:
**BE CH DE FR GB IT LI NL SE**

(56) References cited:
**EP-A- 0 127 381**
**EP-A- 0 132 401**
**GB-A- 2 124 856**
**US-A- 4 323 921**

(73) Proprietor: **GENERAL INSTRUMENT CORPO-
RATION**
**767 Fifth Avenue**
**New York New York 10153(US)**

(72) Inventor: **Horne, Donald**
**20 Edgecliff Golfway 403**
**Don Mills Ontario(CA)**

(74) Representative: **Allam, Peter Clerk et al**
**LLOYD WISE, TREGEAR & CO. Norman
House 105-109 Strand
London WC2R 0AE(GB)**

## Description

The present invention is generally concerned with information distribution in which information in encrypted form is sent from a transmitter or sender node to a plurality of receiver nodes at which the encrypted information is decrypted to provide the information in clear. Such information distribution may be found in subscribers' networks where only authorised subscribers are to be allowed access to the information. In a subscribers' network in which the distribution of information, for example television programming, is done by direct broadcasting by satellite (DBS), the distribution of encrypted information affords a means of discriminating between subscribers and non-subscribers who may have receiver units capable of receiving the satellite transmission but who should be prevented from having free access to the programme content. Thus security of transmission becomes particularly important in DBS and has led to arrangements for controlling access by individual subscribers as will be discussed below.

The invention relates to a system for sending encrypted information for distribution to a plurality of receiver nodes, to a receiver for use as a receiver node with the sending system, and to a network of such receivers and of the sending system and such receivers. The invention further relates to a method of sending information from a transmitter node to a plurality of receiver nodes. The invention finds particular, though not exclusive, application to information distribution using direct broadcast by satellite and still more particularly information distribution which includes television programmes. The invention will be described in detail in the context of television programme distribution by DBS.

The availability of small, low-cost television receive-only terminals in recent years has resulted in an increasing demand for direct broadcast satellite services. Such services include Pay TV, tele-conferencing, tele-seminar, private broadcast networks, and the like. Moreover, as receive-only television antenna technology improves and the cost of television receive-only terminals decreases, the demand for direct broadcast satellite services is expected to increase.

Unlike land lines and terrestrial microwave links, satellite transmissions lack privacy. Such transmissions can be received by any TV receive-only terminal whose antenna is situated to receive the satellite signals. Accordingly, the secure transmission of video and audio programming and data signals is required to provide the privacy essential to many applications.

A simple example of a direct broadcast satellite network in which security is required is one which broadcasts television signals to paying subscribers. Since any receiver having an antenna in the broadcast signal area can receive the satellite signals, it is necessary that the signals be encoded in a way which can be decoded only by subscribers' receivers. Certain subscribers may have paid for certain programs or program groups, whereas others may have paid for other programs or program groups. The signals must then be further encoded such that subscribers who have paid for particular programs or groups of programs can receive same, while other subscribers cannot.

In addition, it may be desirable to design the system such that a particular subscriber can preview a program and then decide whether he/she wishes to watch the program and, hence, pay for the privilege. In such an impulse pay-per-view system, the decision of the subscriber must be recorded and communicated to a billing facility for appropriate billing. In such instances, the control signals to the subscriber's receiver instructing the receiver how to communicate with the billing office must be secure in order to eliminate the possibilities for theft of the service.

We shall describe below a DBS service having the facilities outlined above and to which the teaching of the present invention is applied.

Stated in broad terms, in one aspect the invention provides a system for sending encrypted information from a transmission node for distribution to a plurality of receiver nodes each having an individual address number, the sending system comprising:

means for generating a common key for use in encrypting information to be sent;

a first encryption stage for receiving information in clear to be sent and responsive to said common key to encrypt said information with the aid of said common key so as to provide encrypted information for sending to all receiver nodes;

means storing the address numbers of the receiver nodes;

means storing a master encryption key;

a second encryption stage for encrypting a selected address number using said master encryption key to provide an individual receiver key for the receiver node having the selected address number;

a third encryption stage for encrypting said common key with the aid of said individual receiver key to provide an encrypted common key for sending to the receiver node having said selected address number.

As will be explained more fully below the above master encryption key is stored only at the sending or transmitter end of a complete network which greatly benefits maintenance of security within the network. It is preferred for additional security that the individual receiver keys generated within sending system are generated in real time. To this end the sending system may comprise a real time controller operable to control the selection of address numbers and the operation of the second encryption stage such that, at each encryption of the common key by the third encryption stage, the relevant individual receiver key is generated in real time by the second encryption stage. A further action to enhance security is to arrange for the common key generating means to change the common key from time-to-time.

In the sending system to be described the second, third and first encryption stages operate according to the Data Encryption Standard algorithm, a block cypher algorithm and a stream cypher algorithm respectively.

For distribution of the encrypted common keys to the relevant receivers, the sending system may further comprise means for selecting the address numbers of the plurality of receiver nodes in a sequence for encryption by the second encyption stage; and means for assembling a data stream for distribution to the receiver nodes which includes the encrypted common keys and respective address information identifying the receiver node for which each encrypted common key is intended. In the embodiment to be described the means for assembling this data stream is adapted to provide addressed packets of data each comprising the address number of a receiver node and the encrypted common key pertaining to that address number.

The data stream may be incorporated within a television signal format having video signal portions and horizontal blanking intervals, the data stream being inserted into the horizontal blanking intervals to form a composite television signal. Furthermore, in this composite television signal the encrypted information may also be inserted in the horizontal blanking intervals. The information in clear from which the encrypted information is derived may be audio accompanying a television picture transmission.

Another aspect of the invention lies in providing a receiver for use as a receiver node with the sending system of the invention, comprising:

means storing an individual receiver key pertaining to the address number of the receiver node;

a first decryption stage responsive to reception of an encrypted common key pertaining to the receiver node to decrypt same with the aid of the stored receiver key so as to recover said common key,

and a second decryption stage responsive to the reception of said encrypted information to decrypt same with the aid of said recovered common key and thereby recover said information in clear.

It will be shown hereinafter how in the preferred embodiment of the invention, the individual receiver key stored in the receiver is generated at the time of manufacture of the receiver by means of an encoding system in which the master key is stored and encrypts the individual address number allotted to the receiver in question. This encryption may use the Data Encryption Standard already mentioned. In this case there is produced a stored receiver key which is identical to the individual receiver key that will be generated by the sending system when that particular receiver node is to be sent a data message such as the encrypted common key. The individual receiver keys which are used internally at both the sending end and at the receivers do not need to be transmitted between the two and thus cannot be intercepted.

It will be appreciated that the philosophy of the encryption and decryption underlying this invention enables a subscribers' network of receiver nodes to be controlled from the sending end, each node being allotted a different address number and comprising a receiver as defined above storing a receiver key related to the individual address number. Thus in combination with the sending system of the invention, the subscribers' network of receiver nodes constitutes an information distribution network in which the master key is neither stored in, nor need be sent to, the subscribers' network. The master key is kept secure at the factory and the sending end of the distribution network which in the Applicants' view makes it most difficult to establish a non-authorized decoding of the encrypted information.

The receiver of the invention may also have features commensurate with preferred features of the sending system discussed above such that the two operate in a complementary fashion.

In yet another aspect of the invention there is provided a method of sending information from a transmitter node to a plurality of receiver nodes in which the information is distributed in encrypted form from the transmitter node to the receiver nodes and in which each receiver node has an individual address number allocated thereto, comprising the steps of:

encrypting information in clear with the aid of a common key and distributing the encrypted information from the transmitter node;

encrypting the address number of each receiver node entitled to have access to the information with a master key to provide a receiver key individual to the receiver node;

encrypting said common key with the aid of each receiver key to provide a respective encrypted common key and distributing the encrypted common keys for the receiver nodes entitled to have access to said information;

storing at each of said receiver nodes a receiver key individual thereto;

decrypting at each entitled receiver node the encrypted common key pertaining thereto with the aid of the stored receiver key to obtain said common key, and decrypting the encrypted information received at each entitled receiver node with the aid of said common key to obtain the information in clear.

In the preferred implementation of the method of the invention the encryption of the common key to obtain each encrypted common key is done with a block cypher algorithm, and the decryption at a receiver node of the encrypted common key to obtain the common key is done with a block cypher algorithm.

In this preferred implementation encryption of the information in clear to obtain the encrypted information may be done with a stream cypher algorithm and the decryption at a receiver node of the encrypted information to obtain the information in clear may be done with a stream cypher algorithm.

It is preferred that the encryption of each receiver node address number to obtain the individual receiver key is done with the Data Encryption Standard algorithm. The encrypted common keys are preferably assembled together with associated receiver node address information into a data stream for distribution, and each receiver node stores its address information and uses it to identify the encrypted common key pertaining to that receiver node. More particularly, in the distribution arrangement to be described, the data stream distributed to the receiver nodes comprises addressed packets of data each comprising the address number of a receiver node and the encrypted common key pertaining to that address number, and the address information stored by each receiver node is its address number. The data stream may be incorporated within a television signal format having video signal portions and horizontal blanking intervals the data stream being inserted into the horizontal blanking intervals. The encrypted information may also be inserted into the horizontal blanking intervals. The information in clear to be sent in encrypted form may comprise audio accompanying a television picture signal.

As already noted the invention finds particular application in information distribution by direct broadcast by satellite and an embodiment of the invention for DBS purposes will now be more fully described with reference to the accompanying drawings in which:

Fig. 1 is a schematic representation of the encryption system at the transmission end of the network;

Fig. 2 is a schematic representation of the decryption system at each receiver terminal;

Fig. 3 is a schematic representation of the encoding system utilized at the factory in order to set the receiver terminal memories for decryption of the distributed signal; and

Fig. 4 is a schematic representation of the composite video signal over which the encrypted signals and key information is transmitted.

We shall firstly describe in general terms the principles of a television broadcast system using DBS with which the invention finds application.

In the direct broadcast satellite service in which the cryptographic techniques of the present invention are used, the video signals are processed and transmitted in analog form. Audio signals are digitized and transmitted in digital data form. Addressable control data is organized into packets according to address and transmitted in the same digital form as the audio signals. All of the signals are combined in baseband using time-division-multiplex techniques. The combined baseband signal is then transmitted over the satellite link to subscribers' receivers using FM modulation.

In general, the transmission end equipment consists of a program processing unit and a real time controller. The program processing unit performs video signal processing and scrambling, audio digitization, encryption of the audio data, and baseband signals time multiplexing. The real time controller generates audio cryptographic keys, encrypts the addressable control messages, generates the packet messages in accordance with the transmission protocol, maintains the user data base and communicates with other processing units.

The receiving end equipment includes an addressable controller decoder designed for use with a receiver which has the necessary interface for interaction with the decoder. The addressable controller-decoder demultiplexes the baseband signal, controls the terminal, descrambles the video signal, decrypts the audio data, and converts the audio data into analog form.

The baseband signal utilizes a composite video signal format which includes active video portions and horizontal blanking interval portions. The two audio channels and control data channel occupy a portion of the horizontal blanking intervals. The video frame synchronization information and the zero level reference are transmitted during the vertical blanking interval. The audio data and the control data are transmitted in a burst, synchronous mode. The data is non-returnable to zero binary encoded.

A two-level video scrambling screen is used. The first level is achieved by removing the line and frame synchronization pulses completely from the video signal. A unique sync word is transmitted in the vertical blanking interval for synchronization purposes. The addressable controller-decoder establishes synchronization by searching and locating the sync word. Once the sync word is located, all the sync pulses are reconstructed with reference to the sync word. This technique is used in conjunction with video signal inversion, which is the second security level. The sequence of video inversion is controlled by a binary bit stream at the transmitting end. The same bit stream is used to recover the inverted signal at the receiving end.

Unlike video scrambling, a highly secure audio encryption system can be achieved relatively inexpensively. The decryption circuit, being totally digital, can be implemented using semi-custom or custom integrated circuits. It is highly important that the encryption system employed achieve zero transmission error propagation, that is, one bit in error in the encrypted bit stream results in only one bit in error in the decrypted bit stream.

The system uses an encryption scheme in which the clear audio bit stream is combined with the bit stream generated by a stream cipher using an exclusive OR operation. The receiving end decrypts the audio bit stream using the same stream cipher bit stream. The stream cipher bit stream is generated by a secret key and an initializing vector. The algorithm for generating the bit stream is secret. The secret key is used for the duration of the communication session and is transmitted in encrypted form through the control data channel. The initializing vector Is used for the duration of each NTSC frame (in the United States) and is transmitted in the clear form in the horizontal blanking interval. Extremely low error rate for the initializing vector is achieved by transmitting each bit many times.

The addressable control data channel carries a lot of sensitive information such as audio decryption keys and authorization tier levels. The present system is designed to prevent an eavesdropper from receiving the correct information and to prevent a legitimate terminal from receiving more information than is authorized. The encryption system utilized in accord with the present invention uses the concept of different terminal keys. A different key is used for the encrypted transmission to each receiver terminal. In this way, even in the unlikely event that a terminal key is compromised, damage can be stopped quickly by deleting the key.

The addressable control data are organized into blocks of 128 bits and encrypted using a secret block cipher. The length of the terminal key is 64 bits. When compared with the conventional Data Encryption System algorithm, the present block cipher has a larger block and a longer key. Accordingly, brute force attacks on the cipher will take considerably more effort.

In general, the cryptographic system to be described is designed for use in a pay television distribution network and employs three keys to provide security against unauthorized program viewing. First, a master factory key is arbitrarily chosen as a system constant. Second, the master factory key is used in conjunction with an individual subscriber unit address to produce a second key, called a subscriber unit signature key, unique to each subscriber.

A third key, the common audio decryption key, is arbitrarily chosen to encrypt the audio signal at the transmission end. The third key is distributed to each authorized subscriber through the use of the first and second keys.

At the factory, the subscriber unit signature key is pre-loaded into a memory in a specific subscriber receiver unit. To distribute the common audio key, it is encrypted using the subscriber unit signature key as the key input of a unique block cipher algorithm. The resulting encrypted common audio key is delivered to the specific subscriber by an addressed packet in an addressable data stream.

At the specific subscriber receiver unit, the received encrypted common audio key is decrypted using the unique block cipher algorithm which employs the factory pre-loaded subscriber unit signature key as the decryption key. The resulting common decryption key is then used to decrypt the audio signal.

The integrity of the three key system depends on the effectiveness of the security measures employed to keep the master factory key safe from independent discovery or unauthorized use. The system now described eliminates the necessity for protecting a separate key for each subscriber unit. In the present system, only a single key, the master factory key, need be protected at the transmission end.

Since the direct broadcast satellite network in which the cryptographic system is employed is designed to accommodate 2-3 million different subscriber receiver units, the avoidance of the burdonsome need to a protect a different key for each subscriber unit is an advantage. The three key cryptographic system now proposed eliminates this problem entirely as it requires only a single master factory key be protected.

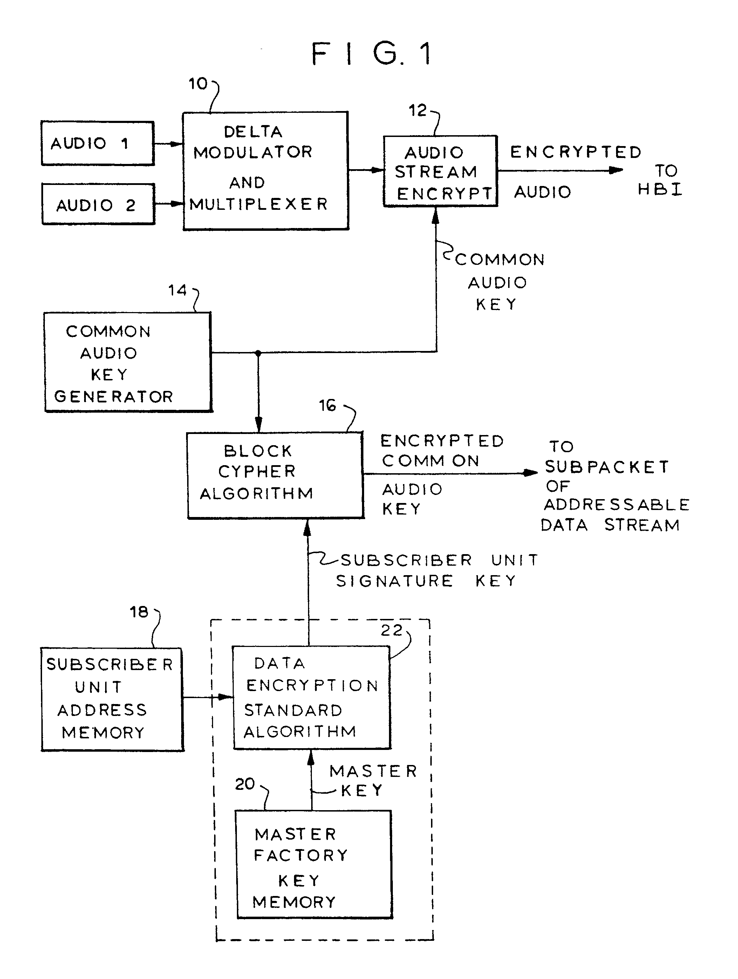

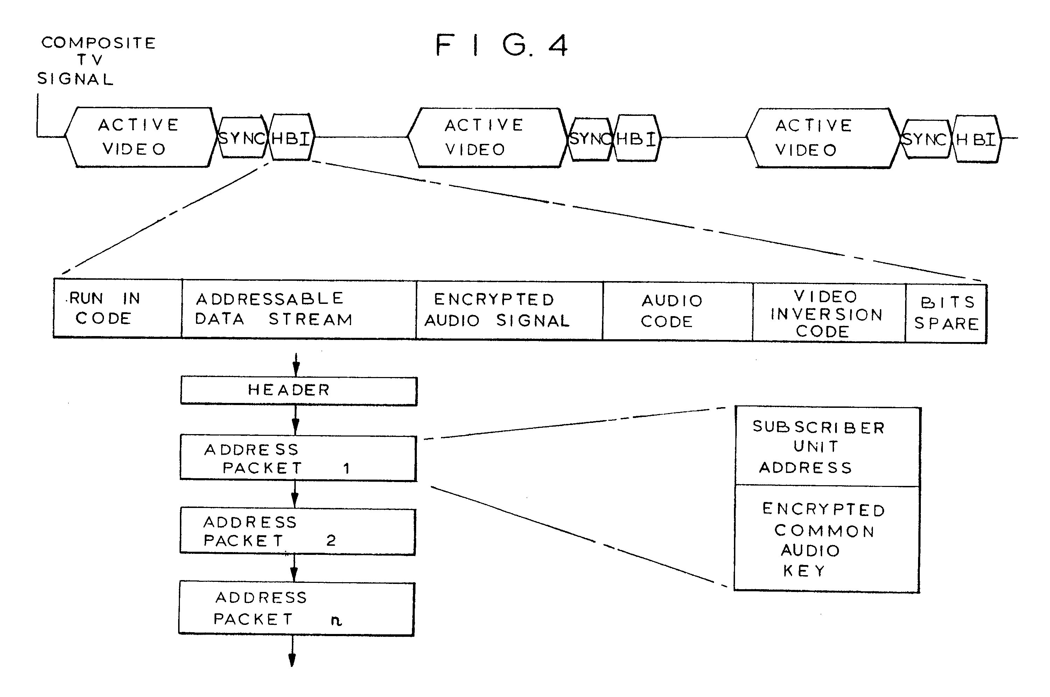

As seen in Fig. 1, the audio channel inputs AUDIO 1 and AUDIO 2 form the inputs to a delta modulator and multiplexer 10 of conventional design. The digitized output from modulator 10 is encrypted in an audio stream encryption circuit 12. The output of encryption circuit 12 is the encrypted audio signal which forms a portion of a data stream. The data stream illustrated in Fig. 4 is inserted into the horizontal blanking intervals of the composite television signal which is transmitted via satellite from the transmission end to each of the subscriber receiver units.

The digitized audio signal is encrypted using a common audio key generated by a common audio key generation circuit 14. The common audio key generating circuit 14 has capability for changing the common audio key periodically, either on a program-by-program basis or on a time basis such as hourly, daily, etc.

The common audio key is transmitted in encrypted form to each subscriber unit. The encrypted common audio key is individualized for each unit. Each of the individualized encrypted common audio keys, one of which is present for each subscriber receiver unit, is placed in a different addressed portion of the data stream. These portions of the data stream can be received only by the particular subscriber unit for which the individualized encrypted common audio key is intended.

Each individualized encrypted common audio key is generated through the use of a subscriber unit signature key. The subscriber unit signature key is unique to a particular unit. Each individualized encrypted common audio key is generated by encrypting the common audio key using the unique subscriber unit signature key in a block cipher algorithm circuit 16.

Each unique subscriber unit signature key is based on the subscriber unit address number for the subscriber unit to which the portion of the data stream including the individualized encrypted common audio key is addressed. More specifically, each unique subscriber unit signature key is derived by encrypting the subscriber unit address number, stored in a memory 18, using the master factory key, stored in a master factory key memory 20, in an encryption circuit 22 which employs the Data Encryption Standard algorithm.

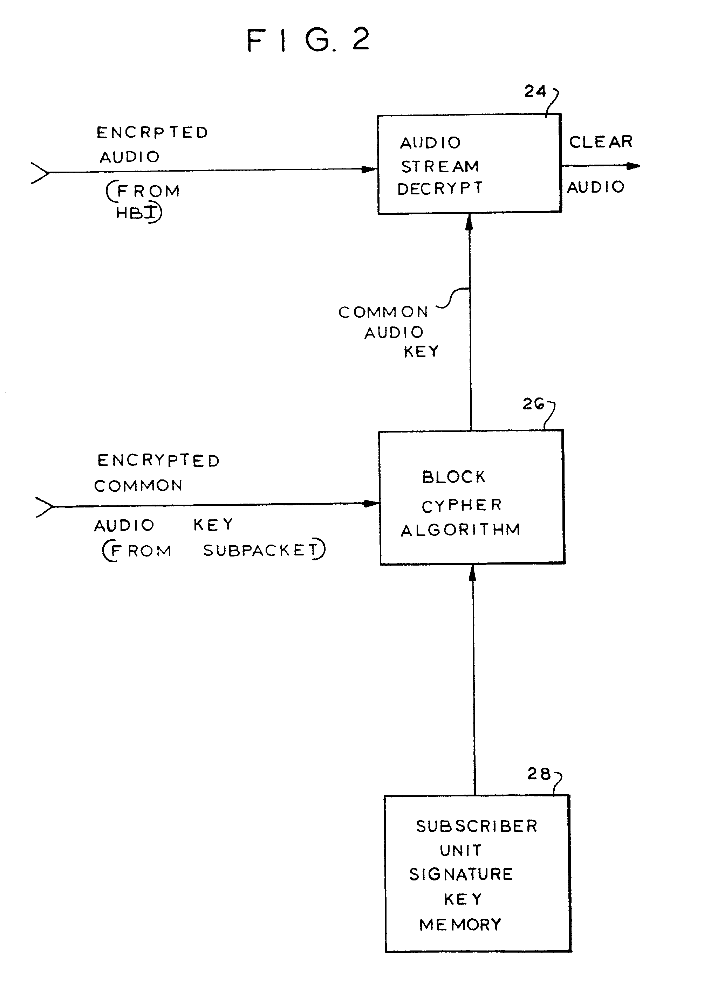

As shown in Fig. 2, the transmitted encrypted audio signal is extracted from the data stream in the horizontal blanking intervals of the received composite television signal and forms an input to an audio stream decryption circuit 24. The encrypted audio signal will be decrypted using the common audio key. The common audio key is derived from the individualized encrypted common audio key which is transmitted to the receiver.

The receiver monitors the data stream in the horizontal blanking intervals until it detects the portion thereof with its unique address number. The individualized encrypted common audio key for the particular subscriber unit is then obtained from the addressed portion. The individualized encrypted common audio key is then decrypted in a block cipher algorithm circuit 26 and used to decrypt the encrypted audio signal, also transmitted in the data stream.

The subscriber unit signature key for the particular subscriber unit is utilized as the key for the block cipher algorithm circuit 26. The unique subscriber unit signature key for each subscriber unit is stored in a memory 28 within the unit. The unique subscriber unit signature key for the particular unit is stored in the unit memory in the factory.

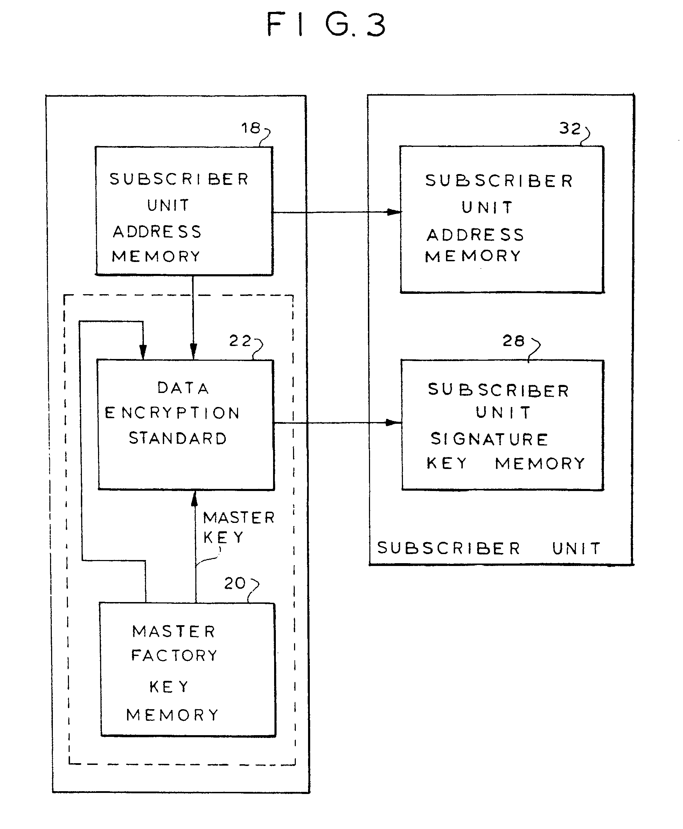

Fig. 3 schematically depicts the factory encoding system. At the factory, the subscriber unit address is read from the subscriber unit address memory 18 and stored in the subscriber unit address memory 32 in the subscriber unit. The subscriber unit address is encrypted in the Data Encryption Standard algorithm circuit 22 using the master factory key from memory 20 and is then stored in the subscriber unit signature key memory 28 in the subscriber unit. Later, when signals are being transmitted, the master factory key from memory 20 is used in the Data Encryption Standard algorithm circuit 22 to generate the unique subscriber unit signature key for each subscriber unit, as described above.

Fig. 4 schematically represents the transmitted composite TV signal which comprises a plurality of active video portions, sync portions, and horizontal blanking portions. The data stream is inserted into consecutive horizontal blanking portions.

The data stream includes a run-in code for synchronization, an addressable data stream portion, the encrypted digitized audio signals, an audio code portion indicating whether the audio signals are stereo or bilingual, video inversion code, and spare bits.

The addressable data stream includes a header portion, containing information for addressing certain groups of subscribers and certain program related information common to all subscriber units in the addressed group. The addressable data stream also includes a plurality of addressed packets 1...n, each containing the address number for a different subscriber unit. Each addressed packet also contains the individualized common audio key for the addressed unit.

Each subscriber unit captures the encrypted audio information, finds a header with its group number, and then searches for the addressed packet with its address number. When the packet with its address number is located, the unit obtains the individualized common audio key therein and uses it, in conjunction with the unique subscriber unit signature key stored in the unit to decrypt the audio signals.

It will now be appreciated that the three key cryptographic system that has been described permits the secure distribution of digitized signals to a large number of subscriber units without the necessity for storing a different key for each subscriber unit. Only a single master factory key most be protected in order to maintain the integrity of the entire system.

Moreover, there is nothing stored in any particular subscriber unit which, if obtained, would permit the cryptographic system to be broken. Even interception and analysis of all individualized encrypted common audio keys will not provide information concerning the master factory key. Further, periodically changing the common audio key further increases the security of the system.

## Claims

1. A system for sending encrypted information from a transmission node for distribution to a plurality of receiver nodes each having an individual address number, the sending system comprising:

   means (14) for generating a common key for use in encrypting information to be sent;

   a first encryption stage (12) for receiving information in clear to be sent and responsive to said common key to encrypt said information with the aid of said common key so as to provide encrypted information for sending to all receiver nodes;

   means (18) storing the address numbers of the receiver nodes;

   means (20) storing a master encryption key;

   a second encryption stage (22) for encrypting a selected address number using said master encryption key to provide an individual receiver key for the receiver node having the selected address number;

   a third encryption stage (16) for encrypting said common key with the aid of said individual receiver key to provide an encrypted common key for sending to the receiver node having said selected address number.

2. A sending system as claimed in Claim 1 comprising a real time controller operable to control the selection of address numbers and the operation of said second encryption stage (22) such that, at each encryption of said common key by said third encryption stage, the relevant individual receiver key is generated in real time by said second encryption stage (22).

3. A sending system as claimed in Claim 1 or 2 in which said second encryption stage (22) operates according to the Data Encryption Standard algorithm.

4. A sending system as claimed in Claim 1, 2 or 3 in which said third encryption stage (16) operates according to a block cypher algorithm.

5. A sending system as claimed in Claim 1, 2, 3 or 4 in which said first encryption stage (12) operates according to a stream cypher algorithm.

6. A sending system according to any preceding claim, comprising means for selecting the address numbers of said plurality of receiver nodes in a sequence for encryption by said second encryption stage (22); and means for assembling a data stream (Fig. 4) for distribution to said receiver nodes which includes said encrypted common keys and respective address information identifying the receiver nodes for which each encrypted common key is intended.

7. A sending system as claimed in Claim 6 in which said means for assembling said data stream is adapted to provide addressed packets of data each comprising the address number of a receiver node and the encrypted common key pertaining to that address number.

8. A sending system as claimed in Claim 7 in which said data stream is incorporated within a television signal format having video signal portions and horizontal blanking intervals (HBI), said data stream being inserted into said horizontal blanking intervals to form a composite television signal.

9. A sending system as claimed in Claim 8 in which said encrypted information is inserted into said horizontal blanking intervals (HBI).

10. A sending system as claimed in Claim 8 or 9 in which said information in clear comprises audio accompanying a television picture transmission.

11. A sending system as claimed in any preceding claim in which said common key generating means (14) is operable to change said common key from time-to-time.

12. A receiver for use as a receiver node with the sending system of Claim 1, comprising:

    means (28) storing an individual receiver key pertaining to the address number of the receiver node;

    a first decryption stage (26) responsive to reception of an encrypted common key pertaining to the receiver node to decrypt same with the aid of the stored receiver key so as to recover said common key,

and a second decryption stage (24) responsive to the reception of said encrypted information to decrypt same with the aid of said recovered common key and thereby recover said information in clear.

13. A receiver as claimed in Claim 12 for use with the sending system of Claim 4 in which said first decryption stage (26) operates according to a block cypher algorithm.

14. A receiver as claimed in Claim 12 or 13 for use with the sending system of Claim 4 in which said second decryption stage (24) operates according to a stream cypher algorithm.

15. A receiver as claimed in Claim 12, 13 or 14 for use with a sending system of Claim 6, further comprising means (32) storing address information pertaining to the receiver node for use in identifying an encrypted common key pertaining to said receiver node to enable decryption of same by said first decryption stage (26).

16. A receiver as claimed in Claim 15 in which said means (32) for storing address information stores the address number of the receiver node.

17. A receiver as claimed in Claim 15 or 16 for use with a sending system of Claim 8, comprising means for extracting the data stream from horizontal blanking intervals of a received composite television signal.

18. A subscribers' network of receiver nodes for receiving encrypted information and encrypted common keys sent by the sending system of Claim 1 in which each node is allotted a different address number and each node comprises a receiver as claimed in any one of Claims 12 to 17.

19. An information distribution network comprising a sending system as claimed in any one of Claims 1 to 11 and a subscribers' network of receiver nodes as claimed in Claim 18.

20. A method of sending information from a transmitter node (Fig. 1) to a plurality of receiver nodes (Fig. 2) in which the information is distributed in encrypted form from the transmitter node to the receiver nodes and in which each receiver node has an individual address number allocated thereto, comprising the steps of: encrypting (12) information in clear with the aid of a common key and distributing the encrypted information from the transmitter node;

encrypting (22) the address number of each receiver node entitled to have access to the information with a master key to provide a receiver key individual to the receiver node;

encrypting (16) said common key with the aid of each receiver key to provide a respective encrypted common key and distributing the encrypted common keys for the receiver nodes entitled to have access to said information;

storing (28) at each of said receiver nodes a receiver key individual thereto;

decrypting (26) at each entitled receiver node the encrypted common key pertaining thereto with the aid of the stored receiver key to obtain said common key, and decrypting (24) the encrypted information received at each entitled receiver node with the aid of said common key to obtain the information in clear.

21. A method as claimed in Claim 20 in which the encryption (16) of the common key to obtain each encrypted common key is done with a block cypher algorithm, and the decryption (26) at a receiver node of the encrypted common key to obtain the common key is done with a block cypher algorithm.

22. A method as claimed in Claim 20 or 21 in which the encryption (12) of the information in clear to obtain the encrypted information is done with a stream cypher algorithm and the decryption (24) at a receiver node of the encrypted information to obtain the information in clear is done with a stream cypher algorithm.

23. A method as claimed in Claim 20, 21 or 22 in which the encryption (22) of each receiver node address number to obtain the individual receiver key is done with the Data Encription Standard algorithm.

24. A method as claimed in any one of Claims 20 to 23 in which the encrypted common keys are assembled together with associated receiver node address information into a data stream (Fig. 4) for distribution, and each receiver node stores its address information and uses it to identify the encrypted common key pertaining to that receiver node.

25. A method as claimed in Claim 24 in which the data stream (Fig. 4) distributed to the receiver nodes comprises addressed packets of data each comprising the address number of a receiver node and the encrypted common key pertaining to that address number, and the address information stored by each receiver node is its address number.

26. A method as claimed in Claim 24 or 25 in which the data stream is incorporated within a television signal format having video signal portions and horizontal blanking intervals (HBI), the data stream being inserted into the horizontal blanking intervals.

27. A method as claimed in Claim 26 in which the encrypted information is inserted into the horizontal blanking intervals (HBI).

28. A method as claimed in Claim 27 in which said information in clear comprises audio accompanying a television picture signal.

29. An information distribution network as claimed in Claim 19 in which the distribution from the sending system to the receiver nodes is effected by direct broadcast by satellite.

30. A method as claimed in any one of Claims 20 to 28 in which the information distribution is done by direct broadcasting by satellite.

## Revendications

1. Système destiné à émettre de l'information chiffrée à partir d'un noeud de transmission en vue de sa distribution à une pluralité de noeuds récepteurs ayant chacun un numéro d'adresse individuel, le système émetteur comprenant :

   un moyen (14) pour créer une clé commune à utiliser pour chiffrer l'information à émettre;

   un premier étage de chiffrement (12) pour recevoir de l'information en clair à émettre et répondant à la clé commune pour chiffrer l'information à l'aide de cette clé commune de manière à fournir de l'information chiffrée à émettre vers tous les noeuds récepteurs;

   un moyen (18) stockant les numéros d'adresse des noeuds récepteurs;

   un moyen (20) stockant une clé de chiffrement principale;

   un deuxième étage de chiffrement (22) pour chiffrer un numéro d'adresse sélectionné à l'aide de la clé de chiffrement principale afin de fournir une clé de réception individuelle pour le noeud récepteur présentant le numéro d'adresse sélectionné;

   un troisième étage de chiffrement (16) pour chiffrer la clé commune au moyen de la clé de réception individuelle afin de fournir une clé commune chiffrée pour émettre vers le noeud récepteur présentant le numéro d'adresse sélectionné.

2. Système émetteur suivant la revendication 1, comprenant un dispositif de commande en temps réel pouvant être utilisé pour commander la sélection de numéros d'adresse et le fonctionnement du deuxième étage de chiffrement (22), d'une manière telle que, à chaque chiffrement de la clé commune par le troisième étage de chiffrement, la clé de réception individuelle pertinente est créée en temps réel par le deuxième étage de chiffrement (22).

3. Système émetteur suivant la revendication 1 ou 2, dans lequel le deuxième étage de chiffrement (22) fonctionne suivant l'algorithme standard de chiffrement de données (Data Encryption Standard).

4. Système émetteur suivant la revendication 1, 2 ou 3, dans lequel le troisième étage de chiffrement (16) fonctionne conformément à un algorithme de chiffrement par blocs.

5. Système émetteur suivant la revendication 1, 2, 3 ou 4, dans lequel le premier étage de chiffrement (12) fonctionne suivant un algorithme de chiffrement en continu.

6. Système émetteur suivant l'une quelconque des revendications précédentes, comprenant des moyens pour sélectionner les numéros d'adresse de la pluralité de noeuds récepteurs dans une séquence en vue du chiffrement par le deuxième étage de chiffrement (22); et des moyens pour assembler un train de données (Fig. 4) en vue de sa distribution aux noeuds récepteurs, ces moyens comprenant les clés communes chiffrées et l'information d'adresse respective identifiant les noeuds récepteurs auxquels chaque clé chiffrée commune est destinée.

7. Système émetteur suivant la revendication 6, dans lequel les moyens pour assembler le train de données sont à même de fournir des paquets adressés de données, comprenant chacun le numéro d'adresse d'un noeud récepteur et la clé commune chiffrée appartenant à ce numéro d'adresse.

8. Système émetteur suivant la revendication 7, dans lequel le train de données est incorporé dans un format de signal de télévision comprenant des parties de signal vidéo et des intervalles de suppression de lignes, le train de données étant inséré dans les intervalles de suppression de lignes de manière à former un signal de télévision composite.

9. Système émetteur suivant la revendication 8, dans lequel l'information chiffrée est insérée dans les intervalles de suppression de lignes.

10. Système émetteur suivant la revendication 8 ou 9, dans lequel l'information en clair comprend de l'information audio accompagnant une transmission d'image de télévision.

11. Système émetteur suivant l'une quelconque des revendications précédentes, dans lequel le moyen de création de la clé commune (14) peut être utilisé pour modifier la clé commune de temps en temps.

12. Récepteur destiné à être utilisé à titre de noeud récepteur avec le système émetteur conforme à la revendication 1, comprenant :

un moyen (28) stockant une clé de réception individuelle appartenant au numéro d'adresse du noeud récepteur;

un premier étage de déchiffrement (26) réagissant à la réception d'une clé commune chiffrée appartenant au noeud récepteur en vue de déchiffrer cette clé au moyen de la clé de réception stockée de manière à récupérer cette clé commune, et

un deuxième étage de déchiffrement (24) réagissant à la réception de l'information chiffrée en vue de déchiffrer cette information au moyen de la clé commune récupérée et en vue de récupérer ainsi l'information en clair.

13. Récepteur suivant la revendication 12, destiné à être utilisé avec le système émetteur conforme à la revendication 4, dans lequel le premier étage de déchiffrement (26) fonctionne suivant un algorithme de chiffrement par blocs.

14. Récepteur suivant la revendication 12 ou 13, destiné à être utilisé avec le système émetteur conforme à la revendication 4, dans lequel le deuxième étage de chiffrement (24) fonctionne suivant un algorithme de chiffrement en continu.

15. Récepteur suivant la revendication 12, 13 ou 14 destiné à être utilisé avec un système émetteur conforme à la revendication 6, comprenant, en outre, un moyen (32) stockant de l'information d'adresse relative au noeud récepteur à utiliser pour l'identification d'une clé commune chiffrée relative au noeud récepteur pour permettre le déchiffrement de cette clé par le premier étage de déchiffrement (26).

16. Récepteur suivant la revendication 15, dans lequel le moyen (32) pour stocker l'information d'adresse stocke le numéro d'adresse du noeud récepteur.

17. Récepteur suivant la revendication 15 ou 16 destiné à être utilisé avec un système émetteur conforme à la revendication 8, comprenant des moyens pour extraire le train de données des intervalles de suppression de lignes d'un signal de télévision composite reçu.

18. Réseau d'abonnés de noeuds récepteurs destiné à recevoir de l'information chiffrée et des clés communes chiffrées émises par le système émetteur conforme à la revendication 1, dans lequel on attribue à chaque noeud un numéro d'adresse différent et chaque noeud comprend un récepteur suivant l'une quelconque des revendications 12 à 17.

19. Réseau de distribution d'information comprenant un système émetteur suivant l'une quelconque des revendications 1 à 11 et un réseau d'abonnés de noeuds récepteurs suivant la revendication 18.

20. Procédé servant à émettre de l'information à partir d'un noeud émetteur (Fig. 1) vers une pluralité de noeuds récepteurs (Fig. 2), dans lequel l'information est distribuée sous une forme chiffrée depuis le noeud émetteur vers les noeuds récepteurs et dans lequel chaque noeud récepteur présente un numéro d'adresse individuel qui lui est attribué, comprenant les étapes consistant à :

chiffrer (12) l'information en clair à l'aide d'une clé commune et distribuer l'information chiffrée à partir du noeud émetteur;

chiffrer (22) le numéro d'adresse de chaque noeud récepteur choisi pour avoir accès à l'information à l'aide d'une clé principale afin de fournir une clé de réception individuelle au noeud récepteur;

chiffrer (16) la clé commune à l'aide de chaque clé de réception pour fournir une clé commune chiffrée respective et distribuer les clés communes chiffrées pour les noeuds récepteurs choisis pour avoir accès à l'information;

stocker (28), au niveau de chaque noeud récepteur, une clé de réception individuelle;

déchiffrer (26), au niveau de chaque noeud récepteur choisi, la clé commune chiffrée qui s'y rapporte, à l'aide de la clé de réception stockée, de manière à obtenir la clé commune, et déchiffrer (24) l'information chiffrée reçue au niveau de chaque noeud récepteur choisi à l'aide de la clé commune de manière à obtenir l'information en clair.

21. Procédé suivant la revendication 20, dans lequel le chiffrement (16) de la clé commune pour obtenir chaque clé commune chiffrée est effectué au moyen d'un algorithme de chiffrement par blocs, et le déchiffrement (26), au niveau d'un noeud récepteur, de la clé commune chiffrée, pour obtenir la clé commune, est effectué au moyen d'un algorithme de chiffrement par blocs.

22. Procédé suivant la revendication 20 ou 21, dans lequel le chiffrement (12) de l'information en clair en vue d'obtenir l'information chiffrée est effectué au moyen d'un algorithme de chiffrement en continu et le déchiffrement (24) au niveau d'un noeud récepteur, de l'information chiffrée en vue d'obtenir l'information en clair est effectué au moyen d'un algorithme de chiffrement en continu.

23. Procédé suivant la revendication 20, 21 ou 22, dans lequel le chiffrement (22) de chaque numéro d'adresse de noeud récepteur en vue d'obtenir la clé de réception individuelle est effectué au moyen de l'algorithme standard de chiffrement de données.

24. Procédé suivant l'une quelconque des revendications 20 à 23, dans lequel les clés communes chiffrées sont assemblées avec de l'information d'adresse du noeud récepteur associé en un train de données (Fig. 4) pour la distribution, et chaque noeud réception stocke son information d'adresse et l'utilise pour identifier la clé commune chiffrée relative à ce noeud récepteur.

25. Procédé suivant la revendication 24, dans lequel le train de données (Fig. 4) distribué aux noeuds récepteurs comprend des paquets adressés de données, comprenant chacun le numéro d'adresse d'un noeud récepteur et la clé commune chiffrée relative à ce numéro d'adresse, et l'information d'adresse stockée par chaque noeud récepteur est son numéro d'adresse.

26. Procédé suivant la revendication 24 ou 25, dans lequel le train de données est incorporé dans un format de signal de télévision comprenant des parties de signal vidéo et des intervalles de suppression de lignes, le train de données étant inséré dans les intervalles de suppression de lignes.

27. Procédé suivant la revendication 26, dans lequel l'information chiffrée est insérée dans les intervalles de suppression de lignes.

28. Procédé suivant la revendication 27, dans lequel l'information en clair comprend de l'information audio accompagnant un signal d'image de télévision.

29. Réseau de distribution d'information suivant la revendication 19, dans lequel la distribution depuis le système émetteur vers les noeuds récepteurs est effectuée par diffusion directe par satellite.

30. Procédé suivant l'une quelconque des revendications 20 à 28, dans lequel la distribution d'information est effectuée par diffusion directe par satellite.

**Patentansprüche**

1. System zum Senden von verschlüsselten Informationen von einem Übertragungsknoten zur Verteilung an eine Mehrzahl von Empfängerknoten mit jeweils ihrer eigenen Adressennummer, wobei das Sendesystem gekennzeichnet ist durch:

ein Mittel (14) zum Erzeugen eines gemeinsamen Schlüssels zur Verwendung bei der Verschlüsselung von zu sendenden Informationen;

eine erste Verschlüsselungsstufe (12) zum Empfangen von zu sendenden Klarinformationen, die auf den besagten gemeinsamen Schlüssel zum Verschlüsseln der besagten Informationen mit Hilfe des besagten gemeinsamen Schlüssels reagiert, um verschlüsselte Informationen zum Senden zu allen Empfängerknoten bereitzustellen;

ein die Adressennummern der Empfängerknoten speicherndes Mittel (18);

ein einen Hauptverschlüsselungsschlüssel speicherndes Mittel (20);

eine zweite Verschlüsselungsstufe (22) zur Verschlüsselung einer ausgewählten Adressennummer mit dem besagten Hauptverschlüsselungsschlüssel zum Bereitstellen eines Einzel-Empfängerschlüssels für den Empfängerknoten mit der ausgewählten Adressennummer;

eine dritte Verschlüsselungsstufe (16) zum Verschlüsseln des besagten gemeinsamen Schlüssels mit Hilfe des besagten Einzel-Empfängerschlüssels zur Bereitstellung eines verschlüsselten gemeinsamen Schlüssels zum Senden zum Empfängerknoten mit der besagten ausgewählten Adressennummer.

2. Sendesystem nach Anspruch 1, gekennzeichnet durch eine Echtzeitsteuerung zum Steuern der Auswahl von Adressennummern und des Betriebes der besagten zweiten Verschlüsselungsstufe (22), sodaß mit jeder Verschlüsselung des besagten gemeinsamen Schlüssels durch die besagte dritte Verschlüsselungsstufe der entsprechende Einzel-Empfängerschlüssel in Echtzeit von der besagten zweiten Verschlüsselungsstufe (22) erzeugt wird.

3. Sendesystem nach Anspruch 1 oder 2, dadurch gekennzeichnet, daß die besagte zweite Verschlüsselungsstufe (22) entsprechend dem Datenverschlüsselungsnorm-(Data Encryption Standard)Algorithmus arbeitet.

4. Sendesystem nach Anspruch 1, 2 oder 3, dadurch gekennzeichnet, daß die besagte dritte Verschlüsselungsstufe (16) nach einem Blockchiffrealgorithmus arbeitet.

5. Sendesystem nach Anspruch 1, 2, 3 oder 4, dadurch gekennzeichnet, daß die besagte erste Verschlüsselungsstufe (12) nach einem Stromchiffrealgorithmus arbeitet.

6. Sendesystem nach einem beliebigen vorhergehenden Anspruch, gekennzeichnet durch ein Mittel zur Auswahl der Adressennummern der besagten Mehrzahl von Empfängerknoten in einer Folge zur Verschlüsselung durch die besagte zweite Verschlüsselungstufe (22); und ein Mittel zum Zusammenfassen eines Datenstromes (Figur 4) zur Verteilung an die besagten Empfängerknoten, der die besagten verschlüsselten gemeinsamen Schlüssel und entsprechenden Adresseninformationen enthält, die die Empfängerknoten identifizieren, für die der jeweilige verschlüsselte gemeinsame Schlüssel bestimmt ist.

7. Sendesystem nach Anspruch 6, dadurch gekennzeichnet, daß das besagte Mittel zum Zusammenfassen des besagten Datenstromes adressierte Pakete von Daten bereitstellen kann, die jeweils die Adressennummer eines Empfängerknotens und den auf diese Adressennummer bezogenen verschlüsselten gemeinsamen Schlüssel umfassen.

8. Sendesystem nach Anspruch 7, dadurch gekennzeichnet, daß der besagte Datenstrom in einem Fernsehsignalformat mit Bildsignalteilen und Zeichenaustastlücken (HBI) enthalten ist, wobei der besagte Datenstrom in die besagten Zeichenaustastlücken eingefügt wird, um ein Fernsehsignalgemisch zu bilden.

9. Sendesystem nach Anspruch 8, dadurch gekennzeichnet, daß die besagten verschlüsselten Informationen in die besagten Zeilenaustastlücken (HBI) eingefügt werden.

10. Sendesystem nach Anspruch 8 oder 9, dadurch gekennzeichnet, daß die besagten Klarinformationen eine Fernsehbildübertragung begleitenden Ton umfassen.

11. Sendesystem nach einem beliebigen vorhergehenden Anspruch, dadurch gekennzeichnet, daß das besagte, den gemeinsamen Schlüssel erzeugende Mittel (14) so betrieben werden kann, daß es den besagten gemeinsamen Schlüssel von Zeit zu Zeit ändert.

12. Empfänger zur Verwendung als Empfängerknoten mit dem Sendesystem nach Anspruch 1, gekennzeichnet durch:

ein einen auf die Adressennummer des Empfängerknotens bezogenen Einzel-Empfängerschlüssel speicherndes Mittel (28);

eine auf den Empfang eines auf den Empfängerknoten bezogenen verschlüsselten gemeinsamen Schlüssels reagierende erste Entschlüsselungsstufe (26) zur Entschlüsselung desselben mit Hilfe des gespeicherten Empfängerschlüssels zur Wiedergewinnung des besagten gemeinsamen Schlüssels, und eine zweite auf den Empfang der besagten verschlüsselten Informationen reagierende Entschlüsselungsstufe (24) zur Entschlüsselung derselben mit Hilfe des besagten wiedergewonnenen gemeinsamen Schlüssels und dadurch zur Wiedergewinnung der besagten Klarinformationen.

13. Empfänger nach Anspruch 12 zur Verwendung mit dem Sendesystem nach Anspruch 4, dadurch gekennzeichnet, daß die besagte erste Entschlüsselungsstufe (26) nach einem Blockchiffrealgorithmus arbeitet.

14. Empfänger nach Anspruch 12 oder 13 zur Verwendung mit dem Sendesystem nach Anspruch 4, dadurch gekennzeichnet, daß die besagte zweite Entschlüsselungsstufe (24) nach einem Stromchiffrealgorithmus arbeitet.

15. Empfänger nach Anspruch 12, 13 oder 14 zur Verwendung mit einem Sendesystem nach Anspruch 6, weiterhin gekennzeichnet durch ein auf den Empfängerknoten bezogene Adresseninformationen speicherndes Mittel (32) zur Verwendung zur Kennzeichnung eines verschlüsselten, auf den besagten Empfängerknoten bezogenen gemeinsamen Schlüssels, um Entschlüsselung desselben durch die besagte erste Entschlüsselungsstufe (26) zu ermöglichen.

16. Empfänger nach Anspruch 15, dadurch gekennzeichnet, daß das besagte Mittel (32) zum Speichern von Adresseninformationen die Adressennummer des Empfängerknotens speichert.

17. Empfänger nach Anspruch 15 oder 16 zur Verwendung mit einem Sendesystem nach Anspruch 8, gekennzeichnet durch ein Mittel zum Ausblenden des Datenstromes aus Zeilenaustastlücken eines empfangenen Fersehsignalgemisches.

18. Teilnehmernetz von Empfängerknoten zum Empfangen von durch das Sendesystem nach Anspruch 1 gesandten verschlüsselten Informationen und verschlüsselten gemeinsamen Schlüsseln, dadurch gekennzeichnet, daß jedem Knoten eine unterschiedliche Adressennummer zugewiesen wird und jeder Knoten einen Empfänger nach einem beliebigen der Ansprüche 12 bis 17 umfaßt.

19. Informationsverteilungsnetz mit einem Sendesystem nach einem beliebigen der Ansprüche 1 bis 11 und Teilnehmernetz von Empfängerknoten nach Anspruch 18.

20. Verfahren zum Senden von Informationen von einem Senderknoten (Figur 1) zu einer Mehrzahl von Empfängerknoten (Figur 2), in dem die Informationen in verschlüsselter Form vom Senderknoten zu den Empfängerknoten verteilt werden und in dem jedem Empfängerknoten eine einzelne Adressennummer zugewiesen wird, gekennzeichnet durch folgende Schritte:
   Verschlüsseln (12) von Klarinformationen mit Hilfe eines gemeinsamen Schlüssels und Verteilen der verschlüsselten Informationen vom Senderknoten;
   Verschlüsseln (22) der Adressennummer jedes zu den Informationen zugangsberechtigten Empfängerknotens mit einem Hauptschlüssel, um einen für den Empfängerknoten individuellen Empfängerschlüssel bereitzustellen;
   Verschlüsseln (16) des besagten gemeinsamen Schlüssels mit Hilfe jedes Empfängerschlüssels, um einen entsprechenden verschlüsselten gemeinsamen Schlüssel bereitzustellen, und Verteilen der verschlüsselten gemeinsamen Schlüssel für die zu den besagten Informationen zugangsberechtigten Empfängerknoten;
   Speichern (28) an jedem der besagten Empfängerknoten eines dafür individuellen Empfängerschlüssels;
   Entschlüsseln (26) an jedem berechtigten Empfängerknoten des zugehörigen verschlüsselten gemeinsamen Schlüssels mit Hilfe des gespeicherten Empfängerschlüssels, um den besagten gemeinsamen Schlüssel zu erhalten, und Entschlüsseln (24) der an jedem berechtigten Empfängerknoten empfangenen verschlüsselten Informationen mit Hilfe des besagten gemeinsamen Schlüssels, um die Klarinformationen zu erhalten.

21. Verfahren nach Anspruch 20, dadurch gekennzeichnet, daß die Verschlüsselung (16) des gemeinsamen Schlüssels, um jeden verschlüsselten gemeinsamen Schlüssel zu erhalten, mit einem Blockchiffrealgorithmus durchgeführt wird, und die Entschlüsselung (26) an einem Empfängerknoten des verschlüsselten gemeinsamen Schlüssels, um den gemeinsamen Schlüssel zu erhalten, mit einem Blockchiffrealgorithmus durchgeführt wird.

22. Verfahren nach Anspruch 20 oder 21, dadurch gekennzeichnet, daß die Verschlüsselung (12) der Klarinformationen, um die verschlüsselten Informationen zu erhalten, mit einem Stromchiffrealgorithmus durchgeführt wird und die Entschlüsselung (24) an einem Empfängerknoten der verschlüsselten Informationen, um die Klarinformationen zu erhalten, mit einem Stromchiffrealgorithmus durchgeführt wird.

23. Verfahren nach Anspruch 20, 21 oder 22, dadurch gekennzeichnet, daß die Verschlüsselung (22) jeder Empfängerknoten-Adressennummer, um den Einzel-Empfängerschlüssel zu erhalten, mit dem Daten verschlüsselungsnormalgorithmus durchgeführt wird.

24. Verfahren nach einem beliebigen der Ansprüche 20 bis 23, dadurch gekennzeichnet, daß die verschlüsselten gemeinsamen Schlüssel mit zugehörigen Empfängerknoten-Adresseninformationen in einen Datenstrom (Figur 4) zur Verteilung zusammengefaßt werden, und jeder Empfängerknoten seine Adresseninformationen speichert und sie zur Kennzeichnung des auf diesen Empfängerknoten bezogenen verschlüsselten gemeinsamen Schlüssels benutzt.

25. Verfahren nach Anspruch 24, dadurch gekennzeichnet, daß der an die Empfängerknoten verteilte Datenstrom (Figur 4) adressierte Datenpakete umfaßt, die jeweils die Adressennummer eines Empfängerknotens und den auf diese Adressennummer bezogenen verschlüsselten gemeinsamen Schlüssel umfassen, und die von jedem Empfängerknoten gespeicherte Adresseninformation seine Adressennummer ist.

26. Verfahren nach Anspruch 24 oder 25, dadurch gekennzeichnet, daß der Datenstrom in einem Fernsehsignalformat mit Bildsignalteilen und Zeilenaustastlücken (HBI) enthalten ist, wobei der Datenstrom in die Zeilenaustastlücken eingefügt wird.

27. Verfahren nach Anspruch 26, dadurch gekennzeichnet, daß die verschlüsselten Informationen in die Zeilenaustastlücken (HBI) eingefügt werden.

28. Verfahren nach Anspruch 27, dadurch gekennzeichnet, daß die besagten Klarinformationen ein Fernsehbildsignal begleitenden Ton umfassen.

29. Informationsverteilungsnetz nach Anspruch 19, dadurch gekennzeichnet, daß die Verteilung vom Sendersystem zu den Empfängerknoten durch direktes Rundsenden über Satellit bewirkt wird.

30. Verfahren nach einem beliebigen der Ansprüche 20 bis 28, dadurch gekennzeichnet, daß die Informationsverteilung durch direktes Rundsenden über Satellit durchgeführt wird.

# F I G. 1

# F I G. 2

ENCRPTED
AUDIO

(FROM
HBI)

24

AUDIO
STREAM
DECRYPT

CLEAR

AUDIO

COMMON
AUDIO
KEY

26

ENCRYPTED
COMMON

AUDIO    KEY
(FROM   SUBPACKET)

BLOCK
CYPHER
ALGORITHM

28

SUBSCRIBER
UNIT
SIGNATURE
KEY
MEMORY

16

# F I G. 3

# F I G. 4

COMPOSITE
T V
SIGNAL

| ACTIVE VIDEO | SYNC | HBI | | ACTIVE VIDEO | SYNC | HBI | | ACTIVE VIDEO | SYNC | HBI |

| RUN IN CODE | ADDRESSABLE DATA STREAM | ENCRYPTED AUDIO SIGNAL | AUDIO CODE | VIDEO INVERSION CODE | BITS SPARE |
|---|---|---|---|---|---|

HEADER

ADDRESS PACKET 1

ADDRESS PACKET 2

ADDRESS PACKET n

| SUBSCRIBER UNIT ADDRESS |
|---|
| ENCRYPTED COMMON AUDIO KEY |

EP 0 179 612 B1